## Europäisches Patentamt
## European Patent Office
## Office européen des brevets

(19)

(11) Veröffentlichungsnummer: **0 078 903**
**B1**

(12)

# EUROPÄISCHE PATENTSCHRIFT

(45) Veröffentlichungstag der Patentschrift:
**06.02.85**

(51) Int. Cl.⁴: **H 04 L 7/10, H 04 J 3/06**

(21) Anmeldenummer: **82108641.0**

(22) Anmeldetag: **18.09.82**

(54) **Verfahren und Anordnung zur Sicherstellung der Start-Synchronisation eines aus Bit-Impulsfolgen bestehenden Telegramms innerhalb eines Empfängers.**

(30) Priorität: **11.11.81 CH 7251/81**

(43) Veröffentlichungstag der Anmeldung:
**18.05.83 Patentblatt 83/20**

(45) Bekanntmachung des Hinweises auf die Patenterteilung:
**06.02.85 Patentblatt 85/6**

(84) Benannte Vertragsstaaten:
**AT BE DE NL SE**

(56) Entgegenhaltungen:
**DE - A - 3 013 554**
**FR - A - 1 287 014**
**GB - A - 2 004 164**
**US - A - 3 472 956**
**US - A - 4 087 677**

**NACHRICHTENTECHNISCHE ZEITSCHRIFT, Band 32, Nr. 2, Februar 1979, Seiten 86-88, Berlin, DE. NACHRICHTENTECHNISCHE ZEITSCHRIFT ELECTRONICS INTERNATIONAL, Band 53, Nr. 23, Oktober 1980, Seite 260, New York, USA ELECTRONICS INTERNATIONAL THE BELL SYSTEM JOURNAL, Band 58, Nr. 9, November 1979, Seiten 2097-2111, New York, USA FOURTH INTERNATIONAL CONFERENCE ON DIGITAL SATELLITE COMMUNICATIONS, 23.-25. Oktober 1978,**

(73) Patentinhaber: **LGZ LANDIS & GYR ZUG AG,**
**CH-6301 Zug (CH)**

(72) Erfinder: **Massey, James Lee, Obere Waidstrasse 17, CH-8037 Zürich (CH)**
Erfinder: **Schaub, Thomas, Gotthardstrasse 44, CH-8800 Thalwil (CH)**

(74) Vertreter: **Müller, Hans-Jürgen, Dipl.-Ing. et al, Müller, Schupfner & Gauger**
**Lucile-Grahn-Strasse 38 Postfach 80 13 69, D-8000 München 80 (DE)**

(56) Entgegenhaltungen: (Fortsetzung)
**Montreal IEEE Catalog Nr. 78CH1326-8, Reg. 7, Seiten 131-138, Montreal, CA.**
**PROCEEDINGS OF THE IEE, Band 123, Nr. 6, Juni 1976, Seiten 481-484, New York, USA**

# Beschreibung

## Anwendungsgebiet und Zweck

Die Erfindung bezieht sich auf ein Verfahren und eine Anordnung zu einer gesicherten Startsynchronisation gemäss dem Oberbegriff des Anspruchs 1.

## Stand der Technik

Aus der FR-A Nr. 1 287 014 ist bekannt, zur Synchronisierung eines Telegramms zwei diesem Telegramm voreilende Bitsequenzen zu verwenden, wobei die erste dieser beiden Sequenzen z.B. die Sequenz 101010... sein kann. Im Empfänger erfolgt die Auswertung der ersten voreilenden Sequenz mit Hilfe eines Flip-Flops und eines nachgeschalteten Zählers, während die zweite voreilende Sequenz mit Hilfe eines Schieberegisters sowie eines als Korrelationsrechner und als Freigabeschalter wirkenden UND-Gatters ausgewertet wird.

Die Verwendung eines (2, 1)-Faltungscodes zur Bitsynchronisation ist an sich bekannt aus „Branch synchronisation schemes for convolutional codes", Wai-Hung Ng., Proc. IEE, vol. 123, Nr. 6, Juni 1976, S. 481-484.

## Aufgabe und Lösung

Der Erfindung liegt die Aufgabe zugrunde, das aus dem Stand der Technik an sich bekannte Verfahren zur Synchronisierung eines aus Bitimpulsfolgen bestehenden Telegramms zu verbessern und weniger anfällig zu machen gegenüber äusseren Störungen sowie gleichzeitig eine Anordnung zur Durchführung des so gefundenen Verfahrens zu realisieren.

Die genannte Aufgabe wird erfindungsgemäss durch die im Kennzeichen der Ansprüche 1 und 3 angegebenen Merkmale gelöst, wobei den beiden Lösungen gemeinsam ist, dass die Korrelation zwischen einem Teil einer verwendeten Vorsequenz und einem Teil einer verwendeten Zwischensequenz möglichst niedrig ist.

Ausführungsbeispiele der Erfindung sind in der Zeichnung dargestellt und werden im folgenden näher beschrieben. Es zeigen:

Fig. 1 eine Synchronisierschaltung für uncodierte Bitimpulsfolgen, und

Fig. 2 eine Synchronisierschaltung für codierte Bitimpulsfolgen.

Gleiche Bezugszeichen bezeichnen in beiden Figuren der Zeichnung gleiche Teile.

## Beschreibung

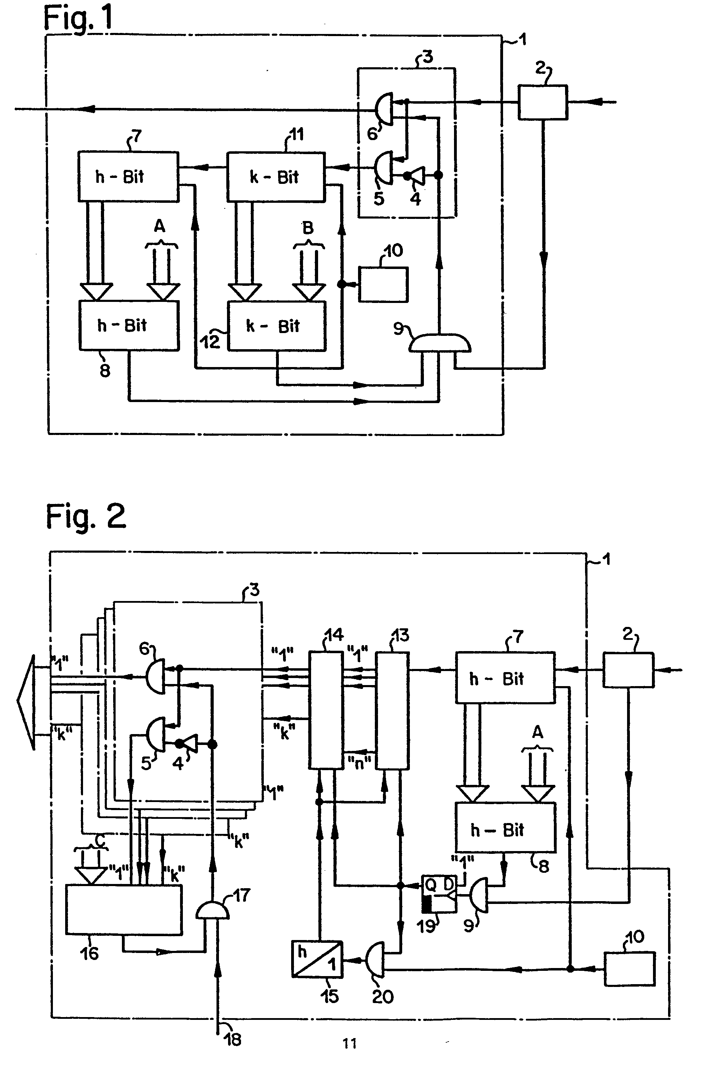

Sowohl die Schaltung gemäss der Fig. 1 wie diejenige nach der Fig. 2 besteht aus einer Synchronisierschaltung 1 und einem Empfängereingangsteil 2, die beide Teil eines gemeinsamen Empfängers sind.

In beiden Fällen besitzt der Empfängereingangsteil 2 einen einzigen Eingang, einen Signal- und einen *ready*-Ausgang und die Synchronisierschaltung 1 einen mit dem Signalausgang des Empfängereingangsteils 2 verbundenen Signaleingang, einen am *ready*-Ausgang des Empfängereingangsteils 2 liegenden Freigabeeingang und einen Telegrammausgang, welcher im Fall der Fig. 1 einpolig und im Fall der Fig. 2 ein k-Bit Datenbus ist. Im einfachsten Fall gilt k = 1, so dass dann die Synchronisierschaltung 1 gemäss der Fig. 2 ebenfalls einen einpoligen Telegrammausgang erhält.

Die Synchronisierschaltung 1 gemäss den beiden Figuren enthält unter anderem:
— Einen (Fig. 1) bzw. k (Fig. 2) Umschalter 3, bestehend je aus einem Inverter 4, einem ersten UND-Gatter 5 und einem zweiten UND-Gatter 6, wobei diese beiden UND-Gatter je zwei Eingänge besitzen.
— Ein erstes Schieberegister 7 und einen zugehörigen ersten Korrelationsrechner 8.
— Ein drittes UND-Gatter 9, welches im Fall der Fig. 1 drei und im Fall der Fig. 2 zwei Eingänge besitzt.
— Einen Uhrengenerator 10.

Die Synchronisierschaltung 1 nach der Fig. 1 enthält ausserdem noch ein zweites Schieberegister 11 und einen zugehörigen zweiten Korrelationsrechner 12, diejenige gemäss der Fig. 2 dagegen noch einen Serienparallelwandler 13, einen Decodierer 14, einen Frequenzteiler 15, einen dritten Korrelationsrechner 16, ein viertes, zwei Eingänge aufweisendes UND-Gatter 17, einen Rückstelleingang 18, ein D-Flip-Flop 19 und ein fünftes, zwei Eingänge aufweisendes UND-Gatter 20.

Die beiden Schieberegister 7 und 11 sind in jedem Fall digital und besitzen je einen einzigen Uhreneingang, einen einzigen Serieneingang und -ausgang sowie einen einzigen x-Bit Parallelausgang. Die beiden Korrelationsrechner 8 und 12 haben je einen ersten und je einen zweiten x-Bit Eingang sowie je einen einzigen einpoligen Ausgang. Der x-Bit Parallelausgang eines der beiden Schieberegister 7 bzw. 11 ist mittels einer x-Bit Datenbusverbindung mit dem ersten x-Bit Eingang des zugehörigen Korrelationsrechners 8 bzw. 12 verbunden. Am weiten x-Bit Eingang des ersten Korrelationsrechners 8 liegt ein erstes digitales x-Bit Referenzwort A und an demjenigen des zweiten Korrelationsrechners 12, falls vorhanden, ein zweites digitales x-Bit Referenzwort B.

Jeder der beiden Korrelationsrechner 8 bzw. 12 besteht aus x nicht gezeichneten, zwei Eingänge aufweisenden Nicht-Exklusiv-ODER-Gattern, die in jedem Korrelationsrechner 8 bzw. 12 je eine gemeinsame, ebenfalls nicht dargestellte Auswerteschaltung ansteuern. Überschreitet die Anzahl Logikwerte 1 am Ausgang der x Nicht-Exkluxiv-ODER-Gatter eines der beiden Korrelationsrechner 8 bzw. 12 einen bestimmten vorgegebenen Grenzwert q < x, so erscheint am einzigen Ausgang der zugehörigen Auswerteschaltung, der gleichzeitig der Ausgang des betreffenden Korrelationsrechners 8 bzw. 12 ist, ein Logikwert 1.

Jede Auswerteschaltung enthält z.B. ein ebenfalls nicht gezeichnetes UND/ODER-Gatter, das seinereits aus $\binom{x}{q} = x!/[q!(x-q)!]$ noch nicht erwähnten UND-Gattern besteht, die je q Eingänge aufweisen und ein gemeinsames ODER-Gatter steuern, dessen Ausgang den Ausgang der Auswerteschaltung bildet. Jeder Kombination von x Ausgängen der Nicht-Exklusiv-ODER-Gatter eines Korrelationsrechners 8 bzw. 12 zur q-ten Klasse ist jeweils einem der UND-Gatter des UND/ODER-Gatters zugeordnet, wobei q dieser Ausgänge jeweils mit den q Eingängen eines dieser UND-Gatter verbunden sind, ohne dass eine bestimmte Kombination dieser Ausgänge je wiederholt wird.

In der Fig. 1 bestehen noch folgende zusätzliche einpolige Verbindungen:

– der Freigabeeingang der Synchronisierschaltung 1 mit einem ersten Eingang des dritten UND-Gatters 9,

– der Ausgang des ersten Korrelationsrechners 8 mit einem zweiten Eingang des dritten UND-Gatters 9,

– der Ausgang des zweiten Korrelationsrechners 12 mit dem dritten Eingang des dritten UND-Gatters 9,

– der einzige Ausgang des Uhrengenerators 10 mit den beiden miteinander verbundenen Uhreneingängen des ersten und des zweiten Schieberegisters 7 und 11,

– der Ausgang des dritten UND-Gatters 9 direkt mit einem ersten Eingang des zweiten UND-Gatters 6 und über den Inverter 4 mit einem ersten Eingang des ersten UND-Gatters 5,

– der Signaleingang der Synchronisierschaltung 1 mit den beiden miteinander verbundenen zweiten Eingängen des ersten und des zweiten UND-Gatters 5 und 6,

– der Ausgang des ersten UND-Gatters 5 mit dem Serieneingang des zweiten Schieberegister 11 und dessen Serienausgang mit dem Serieneingang des ersten Schieberegisters 7, wobei der Serienausgang des letzteren nicht angeschlossen ist, und

– der Ausgang des zweiten UND-Gatters 6 mit dem Telegrammausgang der Synchronisierschaltung 1.

In der Fig. 2 existieren dagegen noch folgende zusätzliche einpolige Verbindungen:

– der Signaleingang der Synchronisierschaltung 1 mit dem Serieneingang des ersten Schieberegisters 7 und dessen Serienausgang mit dem einzigen Serieneingang des Serienparallelwandlers 13,

– der Freigabeeingang der Synchronisierschaltung 1 mit einem ersten Eingang des dritten UND-Gatters 9,

– der Ausgang des ersten Korrelationsrechners 8 mit dem zweiten Eingang des dritten UND-Gatters 9 und dessen Ausgang mit dem einzigen Uhreneingang des D-Flip-Flops 19,

– der Q-Ausgang des D-Flip-Flops 19 mit den einzigen miteinander verbundenen enable-Eingängen des Serienparallelwandlers 13 und des Decodierers 14 sowie mit einem ersten Eingang des fünften UND-Gatters 20,

– der einzige Ausgang des Uhrengenerators 10 mit dem zweiten Eingang des fünften UND-Gatters 20 und dem Uhreneingang des ersten Schieberegisters 7,

– der Ausgang des fünften UND-Gatters 20 mit dem einzigen Eingang des Frequenzteilers 15,

– der Logikwert 1 mit dem einzigen D-Eingang des D-Flip-Flops 19,

– die n Datenausgänge des Serienparallelwandlers 13 mit den n Dateneingängen des Decodierers 14 und dessen k Datenausgänge mit dem einzigen Dateneingang der k Umschalter 3, wobei jeder Dateneingang eines Umschalters 3 an den beiden miteinander verbundenen ersten Eingängen des ersten und des zweiten UND-Gatters 5 und 6 liegt,

– der einzige Ausgang des Frequenzteilers 15 mit den einzigen miteinander verbundenen Uhreneingängen des Serienparallelwandlers 13 und des Decodierers 14,

– die Ausgänge der k UND-Gatter 5 mit einem ersten k-Bit Eingang des dritten Korrelationsrechners 16 und dessen Ausgang mit einem ersten Eingang des vierten UND-Gatters 17, wobei dessen zweiter Eingang am Rückstelleingang 18 liegt,

– der Ausgang des vierten UND-Gatters 17 direkt mit dem zweiten Eingang der k zweiten UND-Gatter 6 und über je einen der k Inverter 4 mit dem zweiten Eingang der k UND-Gatter 5, und

– die Ausgänge der k zweiten UND-Gatter 6 mit dem k-Bit Telegrammausgang der Synchronisierschaltung 1.

Für das erste Schieberegister 7, das erste Referenzwort A und den ersten Korrelationsrechner 8 gilt x = h und für das zweite Schieberegister 11, das zweite Referenzwort B und den zweiten Korrelationsrechner 12 gilt x = k, wobei h und k ganzzahlige Werte darstellen.

An einem zweiten k-Bit Eingang des dritten Korrelationsrechners 16 liegt ein drittes digitales, diesmal k-Bit Referenzwort C.

Der Empfängereingangsteil 2, der Uhrengenerator 10 und der Frequenzteiler 15 sind bekannte Schaltungen der Elektronik; als Decodierer 14 wird am besten ein mit Hilfe eines Mikrocomputers aufgebauter, ebenfalls bekannter Viterbi-Decodierer verwendet. Diese Schaltungen sind nicht Gegenstand eines Patentanspruchs; sie werden daher nicht näher beschrieben. Für alle benötigten restlichen Schaltungen können z.B. digitale Bauelemente der TTL-Reihe 74... der Fa. Texas Instruments, Dallas, Texas, USA verwendet werden.

*Funktionsbeschreibung*

Ein Empfangssignal am Eingang des Empfängereingangsteils 2 wird in diesem auf bekannte und daher nicht beschriebene Weise aufbereitet (Filterung, Demodulation, Pegelanpassung usw.) und erscheint als Bitimpulsfolge am Signaleingang der Synchronisierschaltung 1. Sobald die Anpassung der Empfangsparameter, z.B. der Pegelwerte, im Empfängereingangsteil 2 eine genügende Empfangsqualität ergibt, erscheint am *ready*-Ausgang des Empfängereingangsteils 2 der Logikwert 1 und gibt das dritte UND-Gatter 9 für dessen restliche Eingangssignale frei.

Die erwähnte Bitimpulsfolge besteht zeitlich hintereinander und in der angegebenen Reihenfolge aus einer Vorsequenz V, einer Zwischensequenz Z und einem Telegramm T. Letzteres enthält die zu übertragenden Informationen.

Die Vorsequenz V besteht z.B. aus m sich abwechselnden Logikwerten 1 und 0.

Die Zwischensequenz Z und das Telegramm T sind entweder uncodiert oder werden mittels eines $(n, k)$-Faltungscodes codiert und sind dann mit $Z'$ und $T'$ bezeichnet.

Die uncodierte Zwischensequenz Z besitzt k Bit und wird bei der uncodierten Variante so gewählt, dass die Korrelationen
– der Zwischensequenz Z mit den letzten k Bits der Vorsequenz V,
– der ersten 2j Bits der Zwischensequenz Z mit den letzten 2j Bits der Vorsequenz V, und
– die ersten 2j Bits der Zwischensequenz Z mit den letzten 2j Bits dieser Zwischensequenz Z bei geradzahligem k bzw. die ersten $(2j-1)$ Bits der Zwischensequenz Z mit den letzten $(2j-1)$ Bits dieser Zwischensequenz Z bei ungeradzahligem k, möglichst klein sind. Es gilt $j = 1, 2, ..., (k/2-1)$ bei geradzahligem k und $j = 1, 2, ..., (k/2-0,5)$ bei ungeradzahligem k.

*Beispiele*

m = 14
k = 8
Vorsequenz V: 10101010101010 (14 bit)
Zwischensequenz: 01011100 (8 bit)
Vorsequenz V: 01010101010101 (14 bit)
Zwischensequenz Z: 10101100 (8 bit)

Bei der codierten Variante bilden k aufeinanderfolgende Bits die uncodierte Zwischensequenz Z, welche mit Hilfe eines $(n, k)$-Faltungscodes in die zu sendende codierte Zwischensequenz Z' umgewandelt wird.

*Funktionsbeschreibung der uncodierten Variante gemäss der Fig. 1*

Normalerweise liegt am Ausgang des dritten UND-Gatters 9 der Logikwert 0, so dass alle zweiten UND-Gatter 6 gesperrt und gleichzeitig alle ersten UND-Gatter 5 über den bzw. die Inverter 4 freigegeben sind.

Die beiden Schieberegister 7 und 11 sind in Reihe geschaltet und bilden zusammen ein einziges $(h + k)$-Bit Schieberegister. In diesem wird über das freigegebene erste UND-Gatter 5 nacheinander, in der Zeichnung von rechts nach links, die Vorsequenz V und die Zwischensequenz Z mittels der vom Uhrengenerator 10 gelieferten Uhrenimpulse hineingeschoben. Unter der Voraussetzung, dass z.B. $m > (h + k)$ ist, sind die $(h + k)$ Speicherzellen der beiden Schieberegister 7 und 11 mit den letzten $(h + k)$ Bits der Vorsequenz V belegt, sobald am Eingang des zweiten Schieberegisters 11 das erste Bit der Zwischensequenz Z erscheint. Dieser Augenblick wird mit $t = 0$ bezeichnet.

An Hand eines Beispiels mit dem Wert $h = 5$ und der nachfolgenden Tabelle I wird die weitere Funktionsweise etwas ausführlicher beschrieben.

Es gilt: $m = 14$, $(h + k) = 13$ mit $m > (h + k)$.

Gesandte Bitimpulsfolge:

V,Z,T = 10101010101010,01011100, T.

Das erste Referenzwort A ist gleich den letzten h Bits der Vorsequenz V, d.h. im gewählten Beispiel gleich den 5 letzten Bits 01010 der 14 bit der Vorsequenz V.

Das zweite Referenzwort B ist gleich der Zwischensequenz Z, d.h. gleich 01011100.

*Tabelle I*

| | X | | | | | Y | | | | | | | | Korrelations-wert von | |
|---|---|---|---|---|---|---|---|---|---|---|---|---|---|---|---|
| Bit-Nr. | 1 | 2 | 3 | 4 | 5 | 6 | 7 | 8 | 9 | 10 | 11 | 12 | 13 | X | Y |
| $SR_0$ | 0 | 1 | 0 | 1 | 0 | 1 | 0 | 1 | 0 | 1 | 0 | 1 | 0 | 5 | 2 |
| $SR_1$ | 1 | 0 | 1 | 0 | 1 | 0 | 1 | 0 | 1 | 0 | 1 | 0 | 0 | 0 | 7 |
| $SR_2$ | 0 | 1 | 0 | 1 | 0 | 1 | 0 | 1 | 0 | 1 | 0 | 0 | 1 | 5 | 2 |
| $SR_3$ | 1 | 0 | 1 | 0 | 1 | 0 | 1 | 0 | 1 | 0 | 0 | 1 | 0 | 0 | 5 |
| $SR_4$ | 0 | 1 | 0 | 1 | 0 | 1 | 0 | 1 | 0 | 0 | 1 | 0 | 1 | 5 | 2 |
| $SR_5$ | 1 | 0 | 1 | 0 | 1 | 0 | 1 | 0 | 0 | 1 | 0 | 1 | 1 | 0 | 4 |
| $SR_6$ | 0 | 1 | 0 | 1 | 0 | 1 | 0 | 0 | 1 | 0 | 1 | 1 | 1 | 5 | 3 |
| $SR_7$ | 1 | 0 | 1 | 0 | 1 | 0 | 0 | 1 | 0 | 1 | 1 | 1 | 0 | 0 | 4 |
| $SR_8$ | 0 | 1 | 0 | 1 | 0 | 0 | 1 | 0 | 1 | 1 | 1 | 0 | 0 | 5 | 8 |
| Referenzwort | 0 | 1 | 0 | 1 | 0 | 0 | 1 | 0 | 1 | 1 | 1 | 0 | 0 | | |
| | | | A | | | | | | B | | | | | | |

Bei jedem neuen Uhrenimpuls des Uhrengenerators 10 wird ein Inhalt $SR_t$ des $(h + k)$-Bit Schieberegisters in der Darstellung der Fig. 1 und der Tabelle I um eine Stelle von rechts nach links verschoben, und gleichzeitig das am Serieneingang des zweiten Schieberegisters 11 anstehende Bit in die erste, rechte Speicherzelle dieses Schieberegisters 11 übernommen.

In der Tabelle I bezeichnet:
- die Zeile $SR_t$ den Inhalt des $(h + k)$-Bit Schieberegisters im Augenblick t,
- die Spalte X den Inhalt des ersten Schieberegisters 7, und
- die Spalte Y den Inhalt des zweiten Schieberegisters 11.

Wie bereits erwähnt, ist im Augenblick t = 0 der Inhalt $SR_o$ des $(h + k)$-Bit Schieberegisters gleich den letzten $(h + k) = 13$ bit der Vorsequenz V, nämlich 0101010101010, und das erste Bit der Zwischensequenz Z 01011100, nämlich 0, liegt am Eingang des zweiten Schieberegisters 11. Der Wert t ist der fortlaufende Zählwert der Uhrenimpulse des Uhrengenerators 10 seit dem Augenblick t = 0. Z.B. nach drei solchen Uhrenimpulsen ist der Augenblick t = 3 erreicht und der Inhalt des $(h + k)$-Bit Schieberegisters gleich $SR_3$, d.h. gleich 1010101010010.

Eine treppenförmige Linie trennt in der Tabelle I die Vorsequenz V von der Zwischensequenz Z. In den letzten t Speicherzellen des $(h + k)$-Bit Schieberegisters sind bei den hier getroffenen Annahmen immer die ersten t Bits der Zwischensequenz Z gespeichert.

Die letzte Zeile der Tabelle I enthält die Referenzworte, und zwar in der Spalte X das erste Referenzwort A, d.h. 01010 und in der Spalte Y das zweite Referenzwort B, nämlich 01011100. In der Tabelle I sind diejenigen Bits von $SR_t$, die mit dem zugehörigen Bit des entsprechenden ersten bzw. zweiten Referenzwortes A bzw. B korrelieren, d.h. die mit diesem Bit identisch sind, unterstrichen; ihre Anzahl ist als Korrelationswert in den beiden letzten Kolonnen der Tabelle I angegeben.

Aus der vorletzten für X geltenden Kolonne der Tabelle I ist ersichtlich, dass beim Empfang unverfälschter Bits bei ungeraden Werten von t die Korrelation für X minimal und gleich Null und bei geraden Werten von t maximal gleich h = 5 ist. Sind einzelne oder mehrere Bits durch Störungen verfälscht, so verschlechtern sich zwar diese beiden Korrelationswerte von X; mit hoher Wahrscheinlichkeit werden jedoch beide den mittleren Wert $(h/2) = 2,5$ nicht erreichen. Der erste Korrelationsrechner 8 erzeugt an seinem Ausgang und damit am zugehörigen Eingang des dritten UND-Gatters 9 nur dann einen Logikwert 1, wenn der Korrelationswert von X grösser als ein Grenzwert $q_1 \geqslant (h/2)$ ist. Abhängig von der Länge der Vorsequenz V, hat der Korrelationsrechner 8 mehrere Möglichkeiten, das Referenzwort A zu erkennen. Man sollte deshalb den Grenzwert $q_1$ für längere Vorsequenzen grösser als h/2 wählen, um sich damit vor falschem Ansprechen des UND-Gatters 9 noch besser zu schützen. Damit besitzen nur die empfangenen und im $(h + k)$-Bit Schieberegister gespeicherten Inhalte $SR_t$ mit geradzahligem Wert von t eine Bedeutung für die Startsynchronisation. Alle $SR_t$ mit ungeradzahligem Wert von t sind für diese bedeutungslos und können im folgenden unberücksichtigt bleiben, da sie das dritte UND-Gatter 9 über dessen zweiten Eingang nie freigeben.

Wie aus der letzten Kolonne der Tabelle I ersichtlich, sind bei geradzahligen Werten von t die Korrelationswerte von Y gleich 2, 2, 2, 3 und k = 8. Alle diese Korrelationswerte sind sehr niedrig, ausser dem letzten Wert. Wird für den zweiten Korrelationsrechner 12 ein hoher Grenzwert $q_2 < k$ gewählt, z.B. ein auf halbem Weg zwischen den beiden höchsten Werten 3 und k = 8 gelegener Wert 6, so gibt der zweite Korrelationsrechner 12 das nachgeschaltete dritte UND-Gatter 9 über dessen dritten Eingang erst im Augenblick t = k = 8 definitiv frei. Dies ist jedoch auch der Augenblick, in welchem die Zwischensequenz Z beendet ist und mit dem nächsten Bit das Telegramm T beginnt. Diese Freigabe erfolgt so lange korrekt, wie die durch Störungen verursachten Bitverfälschungen nicht den Korrelationswert von X bzw. Y in der einen oder anderen Richtung den zugehörigen Grenzwert $q_1$ bzw. $q_2$ überschreiten lassen.

Liegt am *ready*-Ausgang des Empfängereingangsteils 2 der Logikwert 1, so erfolgt im Augenblick t = k = 8 die definitive Freigabe des dritten UND-Gatters 9, so dass der Logikwert 1 an dessen Ausgang den Umschalter 3 umschaltet, indem diesmal das erste UND-Gatter 5 gesperrt und gleichzeitig das zweite UND-Gatter 6 freigegeben wird. Das zeitlich nachfolgende Telegramm T erreicht dementsprechend über dieses zweite UND-Gatter 6 den Telegrammausgang der Synchronisierschaltung 1. Das erste, an diesem Telegrammausgang erscheinende Bit wird von einem nicht gezeichneten, der Synchronisierschaltung 1 nachgeschalteten Teil des Empfängers als erstes Bit des Telegramms T erkannt und akzeptiert, so dass der Beginn der Auswertung und damit die Startsynchronisation dieses Telegramms T trotz eventueller Bitverfälschungen im richtigen Augenblick erfolgt.

*Funktionsbeschreibung der codierten Variante gemäss der Fig. 2*

Die Vorsequenz V, die codierte Zwischensequenz Z' und das codierte Telegramm T' werden zeitlich nacheinander und in der Darstellung der Zeichnung von rechts nach links in das erste und hier einzige Schieberegister 7 hineingeschoben. Die Vorsequenz V ist eine n-Bit periodische, mit Hilfe eines (n, k)-Faltungscodes codierte k-Bit periodische Sequenz. Die vorderste dieser Kombinationen muss nach links nicht unbedingt vollständig sein. Die Korrelation einer Periode der Vorsequenz V mit zwei aufeinanderfolgenden, um t Bit verschobenen Perioden dieser Vorsequenz V muss möglichst klein sein, mit 0 < t < n. Das h-Bit Referenzwort A setzt sich aus den letzten h Bits der Vorsequenz V zusammen.

*Beispiel*

n = 2

n-Bit Kombination = 10

Vorsequenz V = 0101010$\overline{101010}$ mit m = 13

Referenzwort A = 01010 mit $\overline{h = 5}$

Nachdem das erste Schieberegister 7 mit h Bits der Vorsequenz V gefüllt ist und nachdem der vordere unvollständige Teil der n-Bit Kombination das erste Schieberegister 7 wieder verlassen hat, stimmt der Inhalt dieses ersten Schieberegisters 7 das erste Mal überein mit dem ersten Referenzwort A unter der Annahme, dass die empfangenen und gespeicherten Bits der Vorsequenz V durch Störungen nicht verfälscht wurden. Sind sie dagegen teilweise verfälscht, so erzeugt in diesem Augenblick trotzdem aus den gleichen Gründen, wie sie bereits anlässlich der Funktionsbeschreibung der uncodierten Variante näher erläutert wurden, der erste Korrelationsrechner 8, dessen Grenzwert $q_1$ wieder $\geq$ (h/2) ist, an seinem Ausgang den Logikwert 1. Dies wiederholt sich alle n Bit mal, bis zu dem Augenblick, in dem gleichzeitig ein Logikwert 1 sowohl am *ready*-Ausgang des Empfängereingangsteils 2 als auch am Ausgang des ersten Korrelationsrechners 8 erscheint bzw. vorhanden ist. Abhängig von der Länge der Vorsequenz V hat der Korrelationsrechner 8 auch hier mehrere Möglichkeiten, das Referenzwort A zu erkennen. Man sollte deshalb auch hier den Grenzwert $q_1$ für längere Vorsequenzen grösser als h/2 wählen, um sich damit vor falschem Ansprechen des UND-Gatters 9 noch besser zu schützen. Am Ausgang des dritten UND-Gatters 9 erscheint dann der Logikwert 1, und dessen positiv gehende Flanke bringt das nachgeschaltete D-Flip-Flop 19 zum Kippen, worauf dessen Q-Ausgang sowohl einerseits den Serienparallelwandler 13 und den Decodierer 14 über deren *enable*-Eingänge als auch andererseits den Frequenzteiler 15 über das fünfte UND-Gatter 20 freigibt. Mit diesem Signal am *enable*-Eingang des Decodierers 14 wird dieser in denjenigen Zustand gebracht, in dem er verbleiben würde, wenn an seinen Dateneingängen immer wieder die n-Bit Kombination einer Zwischensequenzperiode erscheinen würde. Für alle (n, 1)-Codes wird dieser Zustand dem 11...1-Zustand entsprechen, da er durch eine Eingangssequenz von lauter Einern entstanden ist. Verwendet man im Decodierer den in „The Theory of Information and Coding", R.J. Mc Eliece, Addison-Wesley Publishing Comp. 1977, S. 211, beschriebenen Viterbi-Decodierungs-Algorithmus, so wird die Initialisierung dadurch erreicht, dass man dem Zustand 11...1 eine hohe Anfangsmetrik zuordnet und dabei die Metrik der anderen Zustände gleich Null setzt. Von diesem Freigabeaugenblick an teilt der Frequenzteiler 15 die Frequenz der Uhrenimpulse des Uhrengenerators 10 durch n und speist anschliessend den Serienparallelwandler 13 und den Decodierer 14 mit diesem frequenzmässig heruntergeteilten Uhrensignal.

Die n Bits der diesem Freigabeaugenblick nachfolgenden n-Bit Kombinationen werden durch den Serienparallelwandler 13 auf dessen n Datenausgänge und damit auf alle n Dateneingänge des Decodierers 14 verteilt, so dass an diesen n Dateneingängen zeitlich nacheinander die einzelnen n-Bit Kombinationen parallel erscheinen und durch den Decodierer 14 nacheinander decodiert werden in ein decodiertes k-Bit Wort.

Solange jeweils die n-Bit Kombinationen der Vorsequenz V an den Dateneingängen des Decodierers 14 anstehen, bleiben die Daten an den k Datenausgängen von Decodierschritt zu Decodierschritt gleich, für den (2, 1)-Faltungscode würden nacheinander Logikwerte 1 erscheinen. Falls am Rückstelleingang 18 der Logikwert 1 liegt, das dritte Referenzwort C aus der uncodierten Zwischensequenz besteht und der Grenzwert des dritten Korrelationsrechners 16 $q_3$ = k ist, wird während der Vorsequenz V das UND-Gatter 17 gesperrt sein. Somit werden über die Inverter 4 die UND-Gatter 5 freigegeben und die UND-Gatter 6 gleichzeitig gesperrt. Die codierte Zwischensequenz Z wird immer so gewählt, dass sie eine möglichst grosse Hammingdistanz zu einer n-Bit Periode der Vorsequenz V benutzt.

Im Fall des (2, 1)-Faltungscodes ist z.B. die uncodierte Zwischensequenz gleich 0, die codierte gleich 01 bzw. 10 und $q_3$ = 1.

Wird nach der Vorsequenz V die n-Bit Kombination der Zwischensequenz Z decodiert, so erscheint an den Datenausgängen des Decodierers 14 und somit am ersten k-Bit Eingang des dritten Korrelationsrechners 16 die uncodierte k-Bit Zwischensequenz, die gleich dem dritten Referenzwort C ist. Somit erscheint am Ausgang des dritten Korrelationsrechners 16 der Logikwert 1, das UND-Gatter 17 wird durchgeschaltet und die nächsten k Ausgangsbits des Decodierers 14 erreichen über die k Umschalter 3 den Telegrammausgang der Synchronisierschaltung 1.

Wird ein (2, 1)-Faltungscode verwendet, so ist die decodierte Zwischensequenz der Länge Eins gleich 0. Damit reduziert sich der Korrelationsrechner 16 zu einem Inverter, das dritte Referenzwort C ist überflüssig, das Teilerverhältnis des Frequenzteilers 15 wird 2 und dieser reduziert sich damit zu einem einzigen Flip-Flop, der k-Bit Telegrammausgang der Synchronisierschaltung 1 besteht nur mehr wie bei der uncodierten Variante aus einem einpoligen Ausgang und es wird auch nur mehr ein einziger Umschalter 3 benötigt.

In diesem Fall ist die einzige n-Bit Kombination der codierten Zwischensequenz Z z.B. gleich dem Einer-Komplement 01 der n-Bit Kombinationen 10 der Vorsequenz V, so dass die gesendete und unverfälschte codierte Bitimpulsfolge mit m = 13 und n = 2 folgendermassen aussieht:

$$V, Z, T' = 0101010101010, 01, T'$$

Die decodierte Bitimpulsfolge ist dann mit k = 1: 111111,0, T, wobei T' das codierte Telegramm T darstellt. T' besteht aus einer Vielzahl Doppelbitkombinationen, bei denen jedes dieser Doppelbits (n = 2) das (2, 1)-Faltungscodewort eines einzigen Bits (k = 1) des uncodierten Telegramms T ist.

## Patentansprüche

1. Verfahren zur Sicherstellung der Startsynchronisation eines aus Bitimpulsfolgen bestehenden Telegramms (T) innerhalb eines Empfängers, wobei dem Telegramm (T) eine m-Bit Vorsequenz (V) und eine dieser Vorsequenz (V) zeitlich nachfolgende k-Bit Zwischensequenz (Z) zeitlich vorausgesendet wird und die Vorsequenz (V) sowie die Zwischensequenz (Z) beide ebenfalls aus je einer Bitimpulsfolge bestehen, dadurch gekennzeichnet, dass die Korrelationen
— der Zwischensequenz (Z) mit den letzten k Bits der Vorsequenz (V),
— der ersten 2j Bits der Zwischensequenz (Z) mit den letzten 2j Bits der Vorsequenz (V), und
— der ersten 2j Bits der Zwischensequenz (Z) mit den letzten 2j Bits dieser Zwischensequenz (Z) bei geradzahligem k bzw. die ersten $(2j-1)$ Bits der Zwischensequenz (Z) mit den letzten $(2j-1)$ Bits dieser Zwischensequenz (Z) bei ungeradzahligem k,
möglichst klein sind für Werte von j = 1, 2, ..., $(k/2-1)$ bei geradzahligem k und j = 1, 2, ..., $(k/2-0,5)$ bei ungeradzahligem k.

2. Verfahren nach Anspruch 1, wobei die Vorsequenz (V) aus m sich abwechselnden Logikwerten 1 und 0 besteht, dadurch gekennzeichnet, dass die Zwischensequenz (Z) aus 8 bit besteht und gleich 01011100 bzw. 10101100 ist.

3. Verfahren nach dem Oberbegriff des Anspruchs 1, dadurch gekennzeichnet, dass die Zwischensequenz (Z) und das Telegramm (T) beide mit einem gleichen (n, k)-Faltungscode codiert sind, dass die codierte Zwischensequenz (Z') aus n Bits besteht und eine möglichst grosse Hammingdistanz zu einer n-Bit Periode der Vorsequenz (V) besitzt, wobei k < n ist sowie k die Anzahl Bits der uncodierten Zwischensequenz (Z) darstellt, und das die Vorsequenz (V) eine n-Bit periodische, mit Hilfe des (n, k)-Faltungscodes codierte k-Bit periodische Sequenz ist, wobei die Korrelation einer Periode der Vorsequenz (V) mit zwei aufeinanderfolgenden um t Bits verschobenen Perioden dieser Vorsequenz (V) möglichst klein ist für alle Werte von 0 < t < n.

4. Verfahren nach Anspruch 2, dadurch gekennzeichnet, dass diese n-Bit periodische Sequenz im Fall von n = 2, k = 1 gleich der Sequenz 1, 0, 1, 0, ..., 1, 0 bzw. deren Einer-Komplement ist.

5. Verfahren nach einem der Ansprüche 3 oder 4, dadurch gekennzeichnet, dass im Fall n = 2, k = 1 die uncodierte Zwischensequenz (Z) gleich 0 und die codierte Zwischensequenz (Z') gleich 01 bzw. 10 ist.

6. Anordnung zur Durchführung des Verfahrens nach einem der Ansprüche 1 oder 2, wobei im Empfänger eine Synchronisierschaltung (1) vorhanden ist, die ein k-Bit Schieberegister (11) und einen diesem zugehörigen Korrelationsrechner (12) für die Zwischensequenz (Z) sowie einen Umschalter (3) enthält, wobei die Parallelausgänge des k-Bit Schieberegisters (11) mit einem ersten k-Bit Eingang des Korrelationsrechners (12) verbunden sind, während an dessen zweitem k-Bit Eingang ein k-Bit Referenzwort (B) anliegt, das gleich der Zwischensequenz (Z) ist, dadurch gekennzeichnet, dass zusätzlich ein h-Bit Schieberegister (7) und ein diesem zugehöriger weiterer Korrelationsrechner (8) für die Vorsequenz (V) vorhanden sind, mit (h + k) < m, wobei die Parallelausgänge des h-Bit Schieberegisters (7) mit einem ersten h-Bit Eingang des weiteren Korrelationsrechners (8) verbunden sind, während an dessen zweitem h-Bit Eingang ein h-Bit Referenzwort (A) anliegt, das gleich den letzten h Bits der Vorsequenz (V) ist.

7. Anordnung zur Durchführung des Verfahrens nach einem der Ansprüche 3, 4 oder 5, wobei im Empfänger eine Synchronisierschaltung (1) vorhanden ist, die ein D-Flip-Flop (19), ein h-Bit Schieberegister (7), einen diesem zugehörigen Korrelationsrechner (8) sowie Umschalter (3) enthält, wobei die Parallelausgänge des h-Bit Schieberegisters (7) mit einem ersten h-Bit Eingang des Korrelationsrechners (8) verbunden sind, während an dessen zweitem h-Bit Eingang ein h-Bit Referenzwort (A) anliegt, dadurch gekennzeichnet, dass k Umschalter (3) und zusätzlich mindestens ein Serienparallelwandler (13), ein Decodier (14) und ein weiterer Korrelationsrechner (16) vorhanden sind, wobei k die Anzahl Bits der uncodierten Zwischensequenz (Z) darstellt, dass das h-Bit Referenzwort (A) gleich den letzten h-Bits der Vorsequenz (V) ist und dass k Ausgänge der Umschalter (3) mit einem ersten k-Bit Eingang des weiteren Korrelationsrechners (16) verbunden sind, während an dessen zweitem k-Bit Eingang ein k-Bit Referenzwort (C) anliegt, das gleich der uncodierten Zwischensequenz (Z) ist.

8. Anordnung nach einem der Ansprüche 6 oder 7, dadurch gekennzeichnet, dass die Korrelationsrechner (8, 12, 16) mittels Nicht-Exklusiv-ODER-Gattern aufgebaut sind, die eine gemeinsame Auswerteschaltung ansteuern, an deren Ausgang der Logikwert 1 liegt, wenn mindestens an $q_1$ (8) bzw. $q_2$ (12) bzw. $q_3$ (16) ihrer Eingänge der Logikwert 1 ansteht.

9. Anordnung nach Anspruch 8, dadurch gekennzeichnet, dass für den ersten Korrelationsrechner (8) der Wert $q_1 = (h/2)$ gilt.

10. Anordnung nach Anspruch 8, dadurch gekennzeichnet, dass für den zweiten Korrelationsrechner (12) $q_2 = 6$ gilt, wenn k = 8 ist.

11. Anordnung nach Anspruch 8, dadurch gekennzeichnet, dass für den dritten Korrelationsrechner (16) $q_3 = k$ gilt.

## Revendications

1. Procédé pour assurer dans un récepteur la synchronisation de début d'un télégramme (T) constitué par des successions d'impulsions de bits, une préséquence à m bits (V) et une séquence intermédiaire à k bits (Z) suivant dans le temps cette préséquence (V) étant émises avant le télégramme (T) dans le temps, et la préséquence (V) ainsi que la séquence intermédiaire (Z) étant toutes deux également constituées chacune par une succession d'impulsions de bits, caractérisé en ce que les corrélations
— de la fréquence intermédiaire (Z) avec les derniers k bits de la préséquence (V);
— des premiers 2j bits de la séquence intermédiaire (Z) avec les derniers 2j bits de la préséquence (V), et
— des premiers 2j bits de la séquence intermédiaire (Z) avec les derniers 2j bits de cette séquence intermédiaire (Z) pour k pair, ou des premiers $(2j-1)$ bits de la séquence intermédiaire (Z) avec les derniers $(2j-1)$ bits de cette séquence intermédiaire (Z) pour k impair
sont aussi petites que possible pour des valeurs de $j = 1, 2, ..., (k/2-1)$ pour k pair et $j = 1, 2, ..., (k/2-0,5)$ pour k impair.

2. Procédé suivant la revendication 1, la préséquence (V) étant constituée par m valeurs logiques 1 et 0 en alternance, caractérisé en ce que la séquence intermédiaire (Z) est constituée par 8 bits et est égale à 01011100 ou 10101100.

3. Procédé suivant l'en-tête de la revendication 1, caractérisé en ce que la séquence intermédiaire (Z) et le télégramme (T) sont tous deux codés avec un même code à repli ou circonvolution (n, k), en ce que la séquence intermédiaire codée (Z') est constituée par n bits et possède une distance de Hamming ausi grande que possible vis-à-vis d'une période à n bits de la préséquence (V), avec k < n ainsi que k représentant le nombre de bits de la séquence intermédiaire non codée (Z), et en ce que la préséquence (V) est une séquence périodique à k bits codée en périodique à n bits à l'aide du code à repli ou circonvolution (n, k), la corrélation d'une période de la préséquence (V) avec deux périodes successives décalées de t bits de cette préséquence (V) étant aussi réduite que possible pour toutes les valeurs de $0 < t < n$.

4. Procédé suivant la revendication 3, caractérisé en ce que cette séquence périodique à n bits est égale, dans le cas de n = 2, k = 1, à la séquence 1, 0, 1, 0, ..., 1, 0 ou à son complément à 1.

5. Procédé suivant l'une des revendications 3 ou 4, caractérisé en ce que, dans le cas n = 2, k = 1, la séquence intermédiaire non codée (Z) est égale à 0 et la séquence intermédiaire codée (Z') est égale à 01 ou 10.

6. Agencement pour la mise en œuvre du procédé suivant l'une des revendications 1 ou 2, un montage de synchronisation (1) existant dans le récepteur, qui comporte un registre de décalage à k bits (11) et un calculateur de corrélation (12) associé à celui-ci pour la séquence intermédiaire (Z), ainsi qu'un commutateur (3), les sorties parallèles du registre de décalage à k bits (11) étant reliées à une première entrée à k bits du calculateur de corrélation (12), tandis qu'à sa seconde entrée à k bits est appliqué un mot de référence à k bits (B) qui est égal à la séquence intermédiaire (Z), caractérisé en ce qu'en plus existent un registre de décalage h bits (7) et un autre calculateur de corrélation (8) associé à celui-ci pour la préséquence (V) avec $(h + k) < m$,

les sorties parallèles du registre de décalage h bits (7) étant reliées à une première entrée à h bits de l'autre calculateur de corrélation (8), tandis qu'à sa seconde entrée à h bits est appliqué un mot de référence à h bits (A) qui est égal aux derniers h bits de la préséquence (V).

7. Agencement pour la mise en œuvre du procédé suivant l'une des revendications 3, 4 ou 5, un montage de synchronisation (1) existant dans le récepteur, qui comporte une bascule D (19), un registre de décalage à h bits (7), un calculateur de corrélation (8) associé à celui-ci, ainsi que des commutateurs (3), les sorties parallèles du registre de décalage à h bits (7) étant reliées à une première entrée à h bits du calculateur de corrélation (8), tandis qu'à sa seconde entrée à h bits est appliqué un mot de référence à h bits (A), caractérisé en ce qu'existent k commutateurs (3) et en outre au moins un convertisseur série/parallèle (13), un décodeur (14) et un autre calculateur de corrélation (16), k représentant le nombre de bits de la séquence intermédiaire non codée (Z), en ce que le mot de référence à h bits (A) est égal aux derniers h bits de la préséquence (V), et en ce que k sorties des commutateurs (3) sont reliées à une première entrée à k bits de l'autre calculateur de corrélation (16), tandis qu'à sa seconde entrée à k bits est appliqué un mot de référence à k bits (C) qui est égal à la séquence intermédiaire non codée (Z).

8. Agencement suivant l'une des revendications 6 ou 7, caractérisé en ce que les calculateurs de corrélation (8, 12, 16) sont constitués à l'aide de portes OU non exclusif qui commandent un circuit d'évaluation commun, à la sortie duquel apparaît la valeur logique 1 lorsqu'au moins à $q_1$ (8) ou $q_2$ (12) ou $q_3$ (16) de leurs entrées est appliquée la valeur logique 1.

9. Agencement suivant la revendication 8, caractérisé en ce que, pour le premier calculateur de corrélation (8), on a la valeur $q_1 = (h/2)$.

10. Agencement suivant la revendication 8, caractérisé en ce que, pour le second calculateur de corrélation (12), on a $q_2 = 6$ lorsque k = 8.

11. Agencement suivant la revendication 8, caractérisé en ce que, pour le troisième calculateur de corrélation (16), on a $q_3 = k$.

**Claims**

1. A process for guaranteeing start synchronisation of a telegram (T) comprising bit pulse trains, within a receiver, wherein a m-bit presequence (V) and a k-bit intermediate sequence (Z) which follows said presequence (V) in respect of time are transmitted ahead of the telegram (T), and the presequence (V) and the intermediate sequence (Z) both also comprise a respective bit pulse train, characterised in that the correlations
— of the intermediate sequence (Z) with the last k bits of the presequence (V);
— of the first 2j bits of the intermediate sequence (Z) with the last 2j bits of the presequence (V), and

— of the first 2j bits of the intermediate sequence (Z) with the last 2j bits of said intermediate sequence (Z) when k is an even number, or of the first (2j−1) bits of the intermediate sequence (Z) with the last (2j−1) bits of said intermediate sequence (Z) when k is an odd number
are as small as possible for values of j = 1, 2, ..., (k/2−1) when k is an even number and j = 1, 2, ..., (k/2−0,5) when k is an odd number.

2. A process according to Claim 1, wherein the presequence (V) comprises m alternating logic values 1 and 0, characterised in that the intermediate sequence (Z) comprises 8 bits and is equal to 01011100 and 10101100 respectively.

3. A process according to the classifying portion of Claim 1, characterised in that the intermediate sequence (Z) and the telegram (T) are both coded with the same (n, k) convolution code, that the coded intermediate sequence (Z′) comprises n bits and has the maximum Hamming distance to a n-bit period of the presequence (V), wherein k < n and k represents the number of bits of the uncoded intermediate sequence (Z), and that the presequence (V) is an n-bit coded periodic sequence of a k-bits periodic sequence coded by means of the (n, k) convolution code, wherein the correlation of a period of the presequence (V) with two successive periods which are displaced by t bits of said presequence (V) is as low as possible for all values of 0 < t < n.

4. A process according to Claim 3, characterised in that said n-bit periodic sequence, in the case where n = 2, k = 1, is equal to the sequence 1, 0, 1, 0, ..., 1, 0 or the one-complement thereof.

5. A process according to one of Claims 3 or 4, characterised in that, in the case where n = 2, k = 1, the uncoded intermediate sequence (Z) is equal to 0 and the coded intermediate sequence (Z′) is equal to 01 and 10 respectively.

6. An arrangement for carrying out the process according to one of Claims 1 or 2, wherein provided in the receiver is a synchronising circuit (1) which includes a k-bit shift register (11) and a correlation computer (12) associated with the shift register, for the intermediate sequence (Z), and a change-over switching means (3), wherein the parallel outputs of the k-bit shift register (11) are connected to a first k-bit input of the correlation computer (12), while applied to the second k-bit input thereof is a k-bit reference word (B) wich is identical to the intermediate sequence (Z), characterised in that there are additionally provided an h-bit shift register (7) and a further correlation computer (8) associated with said shift register, for the presequence (V), with (h + k) < m, wherein the parallel outputs of the h-bit shift register (7) are connected to a first h-bit input of the further correlation computer (8), while applied to the second h-bit input thereof is an h-bit reference word (A) which is identical to the last h-bits of the presequence (V).

7. An arrangement for carrying out the process according to one of Claims 3, 4 or 5, wherein provided in the receiver is a synchronising circuit (1) which includes a D-type flip-flop (19), an h-bit shift register (7), a correlation computer (8) associated there with and change-over switching means (3), wherein the parallel outputs of the h-bit shift register (7) are connected to a first h-bit input of the correlation computer (8), while an h-bit reference word (A) is applied to the second h-bit input thereof, characterised in that there are provided k change-over switching means (3) and, in addition, at least one series/parallel converter (13), a decoder (14) and a further correlation computer (16), wherein k represents the number of bits of the uncoded intermediate sequence (Z), that the h-bit reference word (A) is identical to the last h bits of the presequence (V), and that k outputs of the change-over switching means (3) are connected to a first k-bit input of the further correlation computer (16), while applied to the second k-bit input thereof is a k-bit reference word (C) which is identical to the uncoded intermediate sequence (Z).

8. An arrangement according to one of Claims 6 or 7, characterised in that the correlation computers (8, 12, 16) are formed by means of not-exclusive-OR gates which actuate a common evaluation circuit at the output of which is the logic value 1 when the logic value 1 is at least at $q_1$ (8) or $q_2$ (12) or $q_3$ (16) of its inputs.

9. An arrangement according to Claim 8, characterised in that the value $q_1 = (h/2)$ applies in respect of the first correlation computer (8).

10. An arrangement according to Claim 8, characterised in that $q_2 = 6$ applies in respect of the second correlation computer (12), when k = 8.

11. An arrangement according to Claim 8, characterised in that $q_3 = k$ applies in respect of the third correlation computer (16).

0 078 903

# Fig. 1

# Fig. 2

11